# EUROPÄISCHE PATENTSCHRIFT

(11) **EP 3 677 796 B1**
(45) Veröffentlichungstag und Bekanntmachung des Hinweises auf die Patenterteilung: **06.12.2023**
(21) Anmeldenummer: 19202899.1
(22) Anmeldetag: 14.10.2019
(51) Int. Cl.: F15B 13/02, F15B 20/00, A01D 41/14

(54) **HYDRAULISCHE BETÄTIGUNGSVORRICHTUNG SOWIE ARBEITSFAHRZEUG MIT EINEM ANBAUGERÄT**
HYDRAULIC ACTUATING DEVICE AND WORKING VEHICLE COMPRISING AN ATTACHMENT
DISPOSITIF D'ACTIVATION HYDRAULIQUE AINSI QUE VÉHICULE DE TRAVAIL DOTÉ D'UN ÉLÉMENT RAPPORTÉ

(30) Priorität: 07.01.2019 DE 102019100231
(43) Veröffentlichungstag der Anmeldung: 08.07.2020
(73) Patentinhaber: CLAAS Selbstfahrende Erntemaschinen GmbH, 33428 Harsewinkel (DE)
(72) Erfinder: Flöthmann, Sebastian, 33334 Gütersloh (DE); Kühn, Michael, 48361 Beelen (DE)
(74) Vertreter: CLAAS Gruppe

(56) Entgegenhaltungen:
- EP-A1- 1 606 988
- EP-B1- 1 606 988
- US-A- 1 999 834
- US-A- 2 365 095

## Beschreibung

Die vorliegende Erfindung betrifft eine hydraulische Betätigungsvorrichtung gemäß dem Oberbegriff des Anspruches 1. Weiterhin betrifft die vorliegende Erfindung ein Arbeitsfahrzeug mit einem Anbaugerät gemäß dem Oberbegriff des Anspruches 8 sowie ein Verfahren zum Betreiben einer hydraulischen Betätigungsvorrichtung gemäß dem Oberbegriff des Anspruches 11.

Aus der DE 1 507 215 A1 ist eine hydraulische Betätigungsvorrichtung der eingangs genannte Art bekannt. Die Betätigungsvorrichtung umfasst zwei Arbeitszylinder, die durch zumindest eine Zuleitung, die als Schlauch oder Rohr ausgebildet ist, mit einer Druckquelle zur Bereitstellung eines hydraulischen Druckmediums verbunden sind. Zwischen der Druckquelle und den Arbeitszylindern ist ein Absperrsystem angeordnet ist, welches ein Abfließen des Druckmediums bei einem Druckabfall verhindern soll. Mittels der Betätigungsvorrichtung wird ein als Vorsatzgerät ausgeführtes Anbaugerät für ein landwirtschaftliches Arbeitsfahrzeug in der Höhe veränderbar von diesem getragen. Das zwischen der Druckquelle und den Arbeitszylindern angeordnete Absperrsystem umfasst der Anzahl der Arbeitszylinder entsprechend zwei Absperrorgane, von denen jeweils eines einem Arbeitszylinder zugeordnet ist, um bei einem Druckabfall, verursacht durch einen Bruch in der Zuleitung, ein plötzliches Absinken des Anbaugerätes zu verhindern. Hierzu sperrt das Absperrorgan die vom Bruch betroffene Zuleitung zum Arbeitszylinder, um ein Abfließen des Druckmediums aus diesem zu verhindern. Eine weitere hydraulische Betätigungseinrichtung ist aus dem Dokument EP1606988 A1 bekannt. Die Dokumente US2365095 A und US 1999834 offenbaren hydraulische Betätigungseinrichtungen für parallel angeordnete Hydraulischezylindern um diese mit der gleichen Geschwindigkeit zu bewegen.

Ausgehend vom vorstehend genannten Stand der Technik liegt der Erfindung die Aufgabe zugrunde, eine hydraulische Betätigungsvorrichtung, ein Arbeitsfahrzeug mit einem Anbaugerät sowie ein Verfahren zum Betreiben einer hydraulischen Betätigungsvorrichtung derart weiterzubilden, so dass diese einfacher und sicherer handhabbar sind.

Diese Aufgabe wird erfindungsgemäß durch eine hydraulische Betätigungsvorrichtung mit den Merkmalen des unabhängigen Anspruches 1 gelöst. Weiterhin wird die Aufgabe durch ein Arbeitsfahrzeug mit einem Anbaugerät gemäß dem unabhängigen Anspruch 6 sowie ein Verfahren zum Betreiben einer hydraulischen Betätigungsvorrichtung mit den Merkmalen des unabhängigen Anspruches 9 gelöst.

Vorteilhafte Weiterbildungen sind Gegenstand der jeweiligen Unteransprüche. Gemäß dem Anspruch 1 wird eine hydraulische Betätigungsvorrichtung vorgeschlagen, umfassend zwei Arbeitszylinder, die durch zumindest eine Zuleitung mit einer Druckquelle zur Bereitstellung eines hydraulischen Druckmediums verbunden sind, wobei zwischen der Druckquelle und den Arbeitszylindern ein Absperrsystem angeordnet ist, welches ein Abfließen des Druckmediums bei einem störungsbedingten Druckabfall verhindert, wobei das Absperrsystem in eine Ventilanordnung integriert ist, welche ein Ventilgehäuse mit zwei Zulaufanschlüssen und zwei Ablaufanschlüssen, einen gemeinsamen Schließkörper sowie jeweils ein dem jeweiligen Ablaufanschluss zugeordnetes Federelement umfasst, wobei sich der Schließkörper im störungsfreien Betrieb in einer schwimmenden Position zwischen den Ablaufanschlüssen befindet, und bei einem störungsbedingten Druckabfall in einer Zuleitung zwischen Ablaufanschluss und Arbeitszylinder zum Verschieben des Schließkörpers zu deren Ablaufanschluss an der Ventilanordnung führt um ein Abfließen des Druckmediums aus dem Ablaufanschluss zu verhindern. Mittels des erfindungsgemäßen Absperrsystems lassen sich beide Arbeitszylinder gegen ein Abfließen des Druckmediums durch Bruch einer der Zuleitungen absichern. Das Absperrsystem ist unabhängig vom Betriebszustand der Betätigungsvorrichtung aktiv. Durch die Integration des Absperrsystems für beide Zuleitungen in eine Ventilanordnung besteht ein geringer Bauraumbedarf. Zudem ist das Absperrsystem durch die Integration in die Ventilanordnung nicht oder nur in geringem Maße Umwelteinflüssen ausgesetzt, so dass eine Verschmutzung vermieden werden kann. Bei einem Bruch einer Zuleitung lässt sich ein temporärer Notbetrieb der Betätigungsvorrichtung mit nur einem Arbeitszylinder aufrechterhalten, so dass ein eingeschränkter Betrieb der Betätigungsvorrichtung möglich ist. Das Absperrsystem ist Bestandteil der Ventilanordnung, über welche die Arbeitszylinder mit einem hydraulischen Druck beaufschlagt werden.

Hierzu ist ein hydraulischer Mengenteiler für eine gleichmäßige Durchströmung der Ventilanordnung vorgesehen. Durch den hydraulischen Mengenteiler kann der Schließkörper im störungsfreien Betrieb in seiner schwimmenden Position zwischen den Ablaufanschlüssen gehalten werden. Wegen der hydraulischen Mengenteilung werden im störungsfreien Betrieb beide Wege in der Ventilanordnung, die den jeweiligen Zulaufanschluss und den korrespondierenden Ablaufanschluss eines Arbeitszylinders verbinden, in jedem Betriebszustand mit dem gleichen Volumenstrom durchströmt. Dabei wirken zwei gleichgroße Strömungskräfte mit jeweils entgegengesetztem Richtungssinn auf den gemeinsamen Schließkörper, wodurch dieser stets in einer Mittelposition gehalten wird. Mittels der Federelemente wird in erster Linie eine Zentrierung des Schließkörpers im Ruhezustand erreicht. Ein Druckabfall, verursacht durch einen Bruch der Zuleitung, die als Schlauch und/oder Rohr ausgebildet sein kann, erhöht sich der Volumenstrom, welcher der defekten Zuleitung zugeführt wird. Die nun asymmetrisch auf den Kolben wirkenden Strömungskräfte bewegen den Schließkörper in Richtung des Ablaufanschlusses der defekten Leitung, so dass das Schließelement den hydraulischen Weg zur Leckage verschließt.

Beide Arbeitszylinder sind mechanisch starr miteinander verbunden. Die beiden mechanisch miteinander verbundenen Arbeitszylinder bewegen sich synchron und wirken als hydraulischer Mengenteiler. D.h., dass bei einem Einfahren oder Ausfahren der Arbeitszylinder die Wege in der Ventilanordnung mit dem gleichen Volumenstrom durchströmt werden.

Bevorzugt kann der Schließkörper als ein Kolben mit beidseitig daran angeordneten Schließelementen ausgeführt sein. Der Kolben wird beim Verfahren der Arbeitszylinder beidseitig mit dem gleichen Volumenstrom umströmt, so dass dieser immer druckausgeglichen ist. Dies hat den Effekt, dass der Kolben unabhängig von der Größe und der Strömungsrichtung des Volumenstroms zwischen den Ablaufanschlüssen zentriert wird.

Insbesondere können die Ablaufanschlüsse einander gegenüberliegend an dem Ventilgehäuse angeordnet sein. Hierdurch wird der Aufbau des Ventilgehäuses und des Schließkörpers des Absperrsystems vereinfacht.

Gemäß einer bevorzugten Weiterbildung kann das Absperrsystem in Kombination mit einem Druckspeicher einsetzbar sein, welcher der Ventilanordnung vorgeschaltet ist. Das Absperrsystem ermöglicht es, die hydraulische Betätigungsvorrichtung mittels hydropneumatischer Federung zu federn, um ein Aufschaukeln der hydraulischen Betätigungsvorrichtung bzw. eines Arbeitsfahrzeugs mit der hydraulischen Betätigungsvorrichtung aufgrund wechselnder Belastungen zu vermeiden. Beim hydropneumatischen Federn treten in den Zuleitungen unstetige Strömungen auf, welche ein Absperrsystem mit einem Absperrorgan, wie es in der DE 1 507 215 A1 beschrieben ist, undefiniert zum Schließen bringen können, so dass dieses Absperrsystem mit einer hydropneumatischen Federung nicht einsetzbar ist. Im Unterschied hierzu erlaubt das erfindungsgemäße Absperrsystem mit dem gemeinsamen Schließkörper einen Ausgleich einer durch unstetige Strömungen verursachten Bewegung des Schließkörpers, so dass es nicht zu einem versehentlichen Schließen eines Ablaufanschlusses kommen kann.

Vorzugsweise kann das Absperrsystem zumindest einen Drucksensor zur Detektion eines Druckabfalls in den Zuleitungen umfassen. Im Fall eines Bruchs einer der Zuleitungen verdoppelt sich der Tragdruck in dem Arbeitszylinder mit der intakten Zuleitung. Das Schließelement an dem Schließkörper wird im Fall des Bruchs mit verdoppeltem Tragdruck auf seinen Sitz in dem Ventilgehäuse gedrückt, wodurch der Ablaufanschluss, an welchem die defekte Zuleitung angeschlossen ist, geschlossen wird.

Weiterhin wird die eingangs gestellte Aufgabe durch ein Arbeitsfahrzeug mit einem Anbaugerät gelöst, wobei das Anbaugerät durch eine nach einem der vorstehenden Ansprüche ausgebildete Betätigungsvorrichtung höhenverstellbar ist.

Dabei kann das Absperrsystem an einer Achse des Arbeitsfahrzeugs angeordnet sein, die unterhalb und/oder hinter dem Anbaugerät liegt.

Insbesondere kann das Arbeitsfahrzeug als landwirtschaftliche Arbeitsmaschine, Baumaschine oder kommunales Nutzfahrzeug ausgebildet sein. Bevorzugt kann die landwirtschaftliche Arbeitsmaschine als selbstfahrende Erntemaschine ausgeführt sein. Besonders bevorzugt kann die selbstfahrende Erntemaschine als Mähdrescher oder Feldhäcksler ausgeführt sein.

Des Weiteren wird die eingangs gestellte Aufgabe durch ein Verfahren gemäß dem unabhängigen Anspruch 9 gelöst.

Gemäß dem Anspruch 9 wird ein Verfahren zum Betreiben einer hydraulischen Betätigungsvorrichtung vorgeschlagen, die zwei Arbeitszylinder umfasst, die durch zumindest eine Zuleitung mit einer Druckquelle zur Bereitstellung eines hydraulischen Druckmediums verbunden werden, wobei ein Absperrsystem zwischen der Druckquelle und den Arbeitszylindern angeordnet ist, durch welches ein Abfließen des Druckmediums bei einem störungsbedingten Druckabfall in einer Zuleitung verhindert wird, wobei das Absperrsystem in eine Ventilanordnung integriert ist, welche ein Ventilgehäuse mit zwei Zulaufanschlüssen und zwei Ablaufanschlüssen, einen gemeinsamen Schließkörper sowie jeweils ein dem jeweiligen Ablaufanschluss zugeordnetes Federelement umfasst, wobei der Schließkörper im störungsfreien Betrieb in einer schwimmenden Position zwischen den Ablaufanschlüssen gehalten wird, und bei einem störungsbedingten Druckabfall in einer Zuleitung zwischen einem Ablaufanschluss und dem diesem zugeordneten Arbeitszylinder der

Schließkörper zu deren Ablaufanschluss an der Ventilanordnung verschoben wird um ein Abfließen des Druckmediums aus dem Ablaufanschluss zu verhindern, wobei ein hydraulischer Mengenteiler für eine gleichmäßige Durchströmung der Ventilanordnung vorgesehen ist, wobei die beiden Arbeitszylinder mechanisch starr miteinander verbunden sind und somit als hydraulischer Mengenteiler wirken.

Weiterhin kann die Verbindung des anderen Arbeitszylinders durch die intakte Zuleitung mit der Druckquelle durch das Absperrsystem aufrechterhalten werden. Hierdurch kann ein Notbetrieb aufrechterhalten werden, in welchem die Betätigungsvorrichtung mit halber Hubkraft definiert auf und ab bewegt werden kann.

Die vorliegende Erfindung wird nachstehend anhand eines in den Zeichnungen dargestellten Ausführungsbeispieles näher erläutert.

Es zeigen:
- Fig. 1: schematisch einen vorderen Teil einer als Mähdrescher ausgeführten selbstfahrenden Erntemaschine in einer Seitenansicht;
- Fig. 2: eine schematische Darstellung einer Hydraulikschaltung eines Hydraulikaggregates der Erntemaschine;
- Fig. 3: eine schematische und vereinfachte Darstellung einer hydraulischen Betätigungsvorrichtung im störungsfreien Betrieb;
- Fig. 4: eine schematische und vereinfachte Darstellung der hydraulischen Betätigungsvorrichtung gemäß Fig. 3 in einem durch eine Störung unterbrochenen Betrieb.

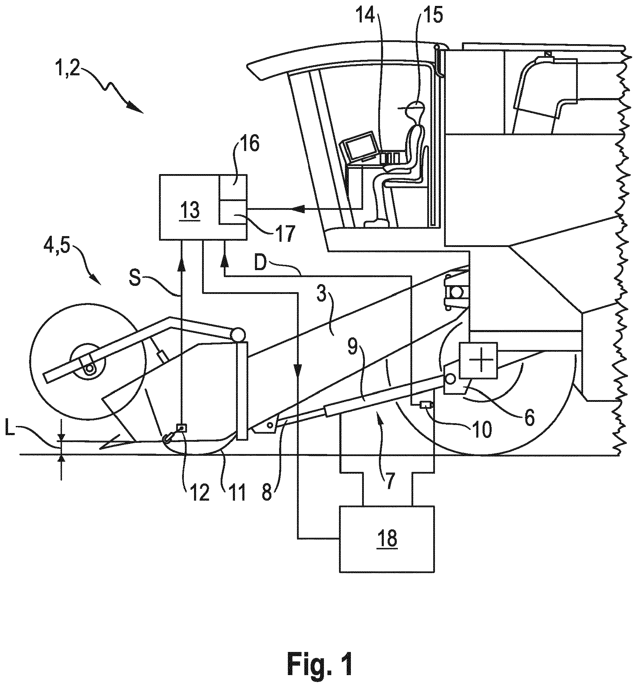

In Fig. 1 ist schematisch der vordere Teil eines als selbstfahrender Mähdrescher 2 ausgeführten Arbeitsfahrzeugs 1 in einer Seitenansicht dargestellt. An einem um eine horizontale Achse schwenkbaren Einzugsschacht 3 des Mähdreschers 2 ist ein beispielhaft als Schneidwerk 4 ausgeführtes Anbaugerät 5 angeordnet. Zwischen dem Einzugsschacht 3 und einem Maschinenrahmen 6 sind zwei Arbeitszylinder 7 angeordnet, die jeweils eine Kolbenstange 8 und ein Zylindergehäuse 9 aufweisen. Die beiden Arbeitszylinder 7 sind Teil einer hydraulischen Betätigungsvorrichtung 36, die an der Vorderachse des als Mähdrescher 2 ausgeführten Arbeitsfahrzeugs 1 angeordnet ist. Die hydraulische Betätigungsvorrichtung 36 kann auch an einer Baumaschine oder einem kommunalen Nutzfahrzeug zum Einsatz kommen. Die jeweilige Kolbenstange 8 der Arbeitszylinder 7 ist gelenkig mit dem Einzugsschacht 3 und das jeweilige Zylindergehäuse 9 der Arbeitszylinder 7 ist gelenkig mit dem Maschinenrahmen 6 des Mähdreschers 2 verbunden sind. Mit dem schwenkbaren Einzugsschacht 3 ist das Schneidwerk 4 mit den Arbeitszylindern 7 auf eine veränderbare Schnitthöhe L einstellbar. Zusätzlich ist das Anbaugerät 5 auf an sich bekannte Weise unter Einsatz weiterer, nicht dargestellter Arbeitszylinder gegenüber dem Einzugsschacht 3 verstellbar am Einzugsschacht 3 angeschlossen. Das von dem Anbaugerät 5 aufgenommene Erntegut gelangt durch den Einzugsschacht 3 zu einem nicht dargestellten Dreschwerk im Mähdrescher 2, welches das Erntegut bearbeitet.

An den beiden Arbeitszylindern 7 ist zumindest ein Drucksensor 10 angeordnet, der den Druck P in den Arbeitszylindern 7 detektiert. Unterhalb des Anbaugerätes 5 sind zwei Tastbügel 11 angebracht, die mit Hilfe von Drehwinkelsensoren 12 die Schnitthöhe L detektieren. Der zumindest eine Drucksensoren 10 und die Drehwinkelsensoren 12 sind mit einer Steuereinheit 13 verbunden, an die ein von dem Drucksensor 10 generiertes Drucksignal D und die von den Drehwinkelsensoren 12 erzeugten Schnitthöhensignale S übermittelt werden. Weiterhin ist die Steuereinheit 13 mit einer Bedieneinheit 14 verbunden, über die ein Bediener 15 einen Soll-Auflagedruck 16 und eine Soll-Schnitthöhe 17 vorgibt, die in der Steuereinheit 13 gespeichert werden. Die Steuereinheit 13 regelt in Abhängigkeit von den Drucksignalen D und/oder den Schnitthöhensignalen S ein mit den Arbeitszylindern 7 verbundenes Hydraulikaggregat 18, mit welchem die Arbeitszylinder 7 druckbeaufschlagt oder entlastet werden. Die Regelung des Hydraulikaggregates 18 erfolgt in Abhängigkeit von dem Schnitthöhensignale S solange das Anbaugerät 5 über dem Boden schwebt und die Tastbügel 11 ein Schnitthöhensignal S erfassen. Sobald das Anbaugerät 5 auf dem Boden aufsetzt oder wenn das Anbaugerät 5 auf dem Boden gleitet, wird das Hydraulikaggregat 18 in Abhängigkeit von den Drucksignalen D geregelt.

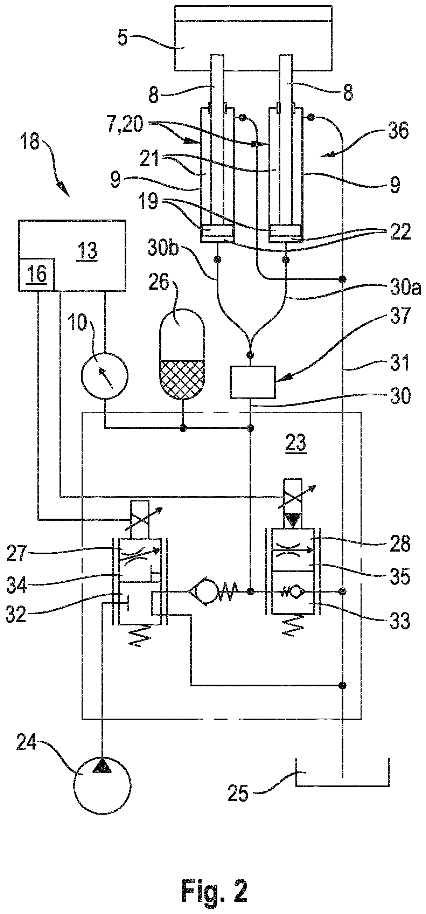

In Fig. 2 ist die Hydraulikschaltung des Hydraulikaggregates 18 zusammen mit den Arbeitszylindern 7 schematisch dargestellt, mit denen das Anbaugerät 5 höhenverstellbar gehalten wird. Beide Arbeitszylinder 7 sind als einfach wirkende Differentialzylinder 20 ausgeführt, wobei ein mit der Kolbenstange 8 fest verbundener Kolben 19 das Zylindergehäuse 9 in einen Kolbendruckraum 22 und einen Kolbenstangendruckraum 21 trennt.

Die Arbeitszylinder 7 sind mit einem Ventilblock 23 verbunden an dem eine Hydraulikpumpe 24, ein Tank 25, und ein Druckspeicher 26 angeschlossen sind. Der Ventilblock 23 selbst nimmt zwei schaltbare Wegeventile 27, 28 und ein Rückschlagventil 29 auf.

Die Hydraulikpumpe 24 ist durch eine Hauptdruckleitung 30 mit den Kolbendruckräumen 22 der Arbeitszylinder 7 verbunden, wenn das Wegeventil 27 in eine Hebestellung 34 geschaltet ist. Hinter dem Wegeventil 27 ist in Strömungsrichtung der Hydraulikpumpe 24 das Rückschlagventil 29 in der Hauptdruckleitung 30 angeordnet, so dass es einen Fluidstrom von den Arbeitszylindern 7 zurück in Richtung Tank 25 sperrt, wenn das Wegeventil 27 in eine Sperrstellung 32 geschaltet ist.

Die Kolbenstangendruckräume 21 der Arbeitszylinder 7 sind über Rücklaufleitungen 31 permanent mit dem Tank 25 verbunden. Zwischen der Hauptdruckleitung 30 und den Rücklaufleitungen 31 ist das Wegeventil 28 geschaltet, welches je nach Schaltstellung einen Fluidstrom von der Hauptdruckleitung 30 zur Rücklaufleitung 31 sperrt oder freigibt. Der Druckspeicher 26 ist parallel zu den Arbeitszylindern 7 an die Hauptdruckleitung 30 angeschlossen.

Zum Anheben des Anbaugerätes 5 wird das Wegeventil 27 in eine Hebestellung 34 geschaltet. Die Hydraulikpumpe 24 beaufschlagt die Kolbendruckräume 22 und den Druckspeicher 26 mit Fluid, wodurch sich ein Druck P aufbaut, der mit dem Drucksensor 10 gemessen wird. Bei Erreichen eines Grenzdruckes fährt die Kolbenstange 8 des Arbeitszylinders 7 aus und hebt das Anbaugerät 5 an. Dabei wird ein eventuell in dem Kolbenstangenraum 21 des Arbeitszylinders 7 befindliches Fluid über die Rücklaufleitung 31 in den Tank 25 verdrängt.

Um das Anbaugerät 5 abzusenken wird das zweite Wegeventil 28 in eine Senkstellung 35 umgeschaltet. In der Senkstellung 35 des Wegeventils 28 sind die Hauptdruckleitung 30 und die Rücklaufleitungen 31 kurzgeschlossen. Das Fluid fließt von der Hauptdruckleitung 30 kommend über das Wegeventil 28 und die Rücklaufleitungen 31 zurück in den Tank 25.

Wenn die beiden Wegeventile 27, 28 wie in Fig. 2 dargestellt in Sperrstellung 32, 33 geschaltet sind, bilden die Kolbendruckräume 22, der Druckspeicher 26 und die Hauptdruckleitung 30 ein nahezu geschlossenes System.

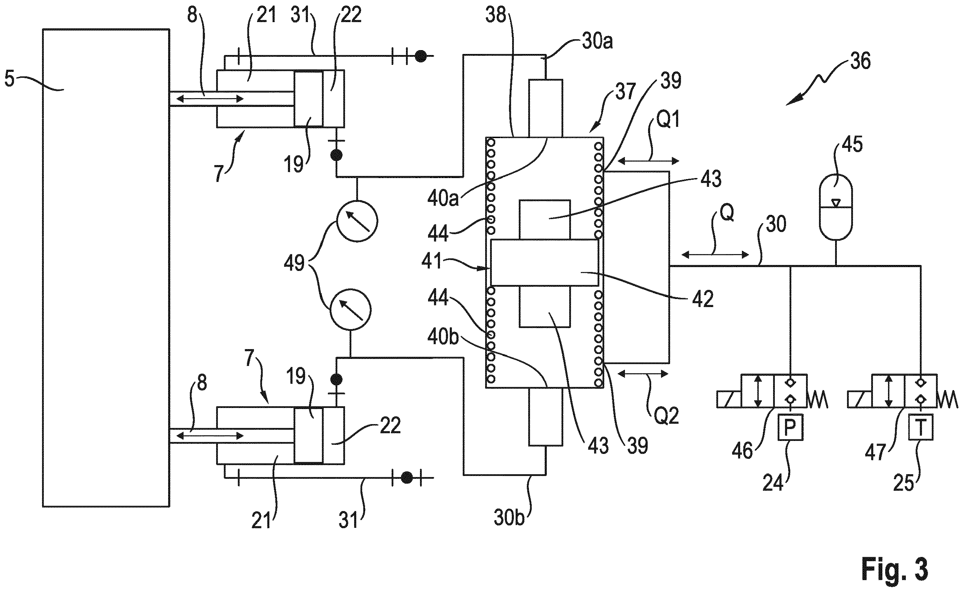

In Fig. 3 ist eine schematische und vereinfachte Darstellung der hydraulischen Betätigungsvorrichtung 36 im störungsfreien Betrieb gezeigt. Die Betätigungsvorrichtung 36 umfasst die beiden Arbeitszylinder 7, welche durch die Hauptdruckleitung 30 und zwei Zuleitungen 30a und 30b mit der Hydraulikpumpe 24 als Druckquelle zur Bereitstellung eines hydraulischen Druckmediums verbunden sind. Zwischen der Hydraulikpumpe 24 und den Arbeitszylindern 7 ist ein Absperrsystem angeordnet ist, welches ein Abfließen des Druckmediums bei einem störungsbedingten Druckabfall verhindert. Ein störungsbedingter Druckabfall resultiert aus einem Bruch einer der beiden Zuleitungen 30a, 30b, die als Schlauch oder Rohr ausgebildet sein können.

Das Absperrsystem ist in eine Ventilanordnung 37 integriert. Die Ventilanordnung 37 bildet das Absperrsystem aus. Die Ventilanordnung 37 umfasst ein Ventilgehäuse 38 mit jeweils zwei Zulaufanschlüssen 39 und zwei Ablaufanschlüssen 40a, 40b. Die Hauptdruckleitung 30 teilt sich auf und ist an jeweils einen der Zulaufanschlüsse 39 angeschlossen. An den jeweiligen Ablaufanschluss 40a, 40b ist die korrespondierende Zuleitung 30a bzw. 30b angeschlossen. In dem Ventilgehäuse 38 ist ein gemeinsamer Schließkörper 41 angeordnet, der sich im dargestellten störungsfreien Betrieb in einer schwimmenden Position zwischen den einander gegenüberliegend angeordneten Ablaufanschlüssen 40a, 40b befindet. Der Schließkörper 41 weist einen Kolben 42 und beidseitig an diesem angeordnete Schließelemente 43 auf. Weiterhin umfasst die Ventilanordnung 37 ein dem jeweiligen Ablaufanschluss 40a, 40b zugeordnetes Federelement 44 auf. Durch die beidseitig des Kolbens 42 angeordneten Federelemente 44 wird der Schließkörper 41 im Ruhezustand der Betätigungsvorrichtung 36, d.h. wenn die Arbeitszylinder 7 nicht verfahren werden, in einer zentrierten Stellung gehalten.

Die Arbeitszylinder 7 sind durch das Anbaugerät 5 mechanisch starr miteinander verbunden, so dass das Verfahren der Arbeitszylinder 7 synchron erfolgt. Die beiden Arbeitszylinder 7 wirken dadurch als ein hydraulischer Mengenteiler für eine gleichmäßige Durchströmung der Ventilanordnung 37. Dies ist in Fig. 3 durch die eingezeichneten Volumenströme Q, Q1, Q2 veranschaulicht. Der von der Hydraulikpumpe 24 kommende Volumenstrom Q teilt sich gleichmäßig in zwei Teilvolumenströme Q1, Q2 auf. Die beiden Teilvolumenströme Q1, Q2 umströmen den Kolben 42 des Schließkörpers 41 beidseitig. Aufgrund der gleichmäßigen Aufteilung des von der Hydraulikpumpe 24 kommenden Volumenstroms Q auf die beiden Teilvolumenströme Q1 und Q2 wirken zwei gleichgroße Strömungskräfte mit jeweils entgegengesetztem Richtungssinn auf den Schließkörper 41, wodurch dieser stets in einer Mittelposition zwischen den Ablaufanschlüssen 40a und 40b gehalten wird.

Weiterhin ist ein Druckspeicher 45 vorgesehen, der mit dem Absperrsystem zusammen eingesetzt werden kann. Hierzu ist der Druckspeicher 45 der Ventilanordnung 37 vorgeschaltet mit der Hauptdruckleitung 30 verbunden. Dies ermöglicht eine hydropneumatische Federung der Betätigungsvorrichtung 36. Ansteuerbare Wegeventile 46 und 47 können die Hauptdruckleitung 30 mit der Hydraulikpumpe 24 bzw. dem Tank 25 verbinden.

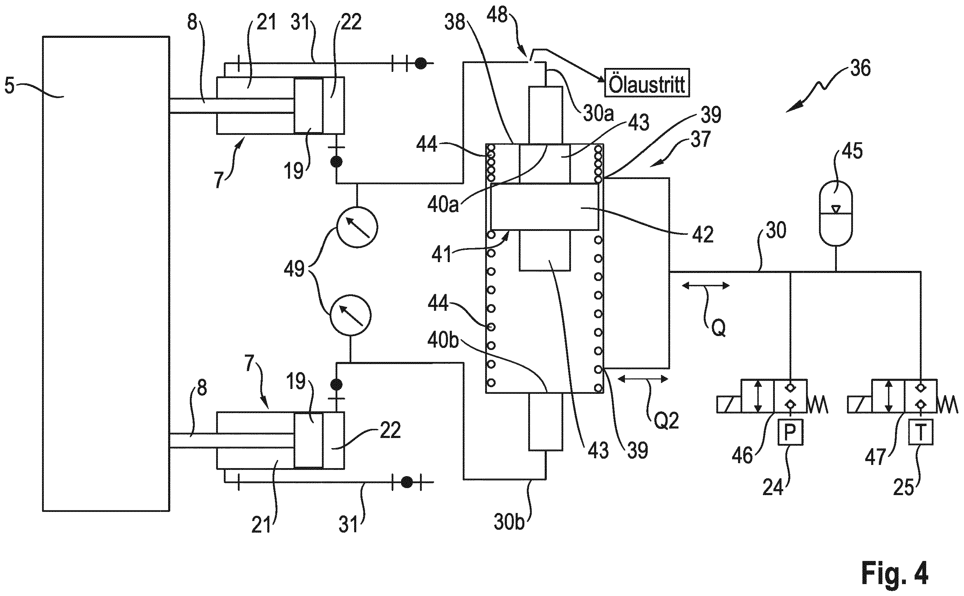

In Fig. 4 ist eine schematische und vereinfachte Darstellung der hydraulischen Betätigungsvorrichtung 36 gemäß Fig. 3 in einem durch eine Störung unterbrochenen Betrieb gezeigt. Die Störung ist durch einen Bruch in der Zuleitung 30a, angedeutet durch eine Bruchstelle 48, verursacht. An der Bruchstelle 48 kommt es zu einem Austreten des Druckmediums, was mit "Ölaustritt" bezeichnet ist. Der Bruch in der Zuleitung 30a verursacht einen schlagartigen Druckabfall in dem Arbeitszylinder 7, der durch die unterbrochene Zuleitung 30a mit der Ventilanordnung 37 verbunden ist. Im Fehlerfall wird der Volumenstrom Q1 zu der defekten Leitung größer. Die nun asymmetrisch wirkenden Strömungskräfte bewegen den Schließkörper 41 sehr schnell in Richtung der defekten Leitung 30a bzw. des Ablaufanschlusses 40a. Der Schließkörper 43 verschließt den hydraulischen Weg zur Leckage. Im Fehlerfall verdoppelt sich der Tragdruck in dem Arbeitszylinder 7 mit der intakten Zuleitung 30b. Das Schließelement 43 des Schließkörpers 41 wird daher mit verdoppeltem Tragdruck auf einen Ventilsitz gedrückt, der dem Ablaufanschluss 40a zugeordnet ist.

Der zum Verfahren der Arbeitszylinder 7 zugeführte Volumenstrom Q strömt nun durch die Ventilanordnung 37 nur in Richtung des Ablaufanschlusses 40b, an welchem die intakte Zuleitung 30b angeschlossen ist. Dabei entspricht der Teilvolumenstrom Q2 dem der Hydraulikpumpe 24 zugeführten Volumenstrom Q. Dies ermöglicht einen Notbetrieb der Betätigungsvorrichtung 36 mit halber Kraft, um das Anbaugerät 5 weiterhin heben oder senken zu können.

Durch das Verbinden zumindest eines Drucksensors 49 mit den Zuleitungen 30a, 30b zwischen dem jeweiligen Hubzylinder 7 und dem Ablaufanschluss 40a, 40b lässt sich das Auftreten eines Bruches einer der Zuleitungen 30a, 30b überwachen und beispielsweise auf der Bedieneinheit 14 zur Anzeige bringen.

**Bezugszeichenliste**

| | | | |
|---|---|---|---|
| 1 | Arbeitsfahrzeug | 30a | Zuleitung |
| 2 | Mähdrescher | 30a | Zuleitung |
| 3 | Einzugsschacht | 31 | Rücklaufleitung |
| 4 | Schneidwerk | 32 | Sperrstellung |
| 5 | Anbaugerät | 33 | Sperrstellung |
| 6 | Maschinenrahmen | 34 | Hebestellung |
| 7 | Arbeitszylinder | 35 | Senkstellung |
| 8 | Kolbenstange | 36 | Betätigungsvorrichtung |
| 9 | Zylindergehäuse | 37 | Ventilanordnung |
| 10 | Drucksensor | 38 | Ventilgehäuse |
| 11 | Tastbügel | 39 | Zulaufanschluss |
| 12 | Drehwinkelsensor | 40a | Ablaufanschluss |
| 13 | Steuereinheit | 40b | Ablaufanschluss |
| 14 | Bedieneinheit | 41 | Schließkörper |
| 15 | Bediener | 42 | Kolben |
| 16 | Auflagedruck | 43 | Schließelement |
| 17 | Sollhöhe | 44 | Federelement |
| 18 | Hydraulikaggregat | 45 | Druckspeicher |
| 19 | Kolben | 46 | Wegeventil |
| 20 | Differentialzylinder | 47 | Wegeventil |
| 21 | Kolbenstangenraum | 48 | Bruchstelle |
| 22 | Kolbendruckraum | 49 | Drucksensor |
| 23 | Ventilblock | | |
| 24 | Hydraulikpumpe | D | Drucksignal |
| 25 | Tank | S | Schnitthöhensignal |
| 26 | Druckspeicher | Q | Volumenstrom |
| 27 | Wegeventil | Q1 | Teilvolumenstrom |
| 28 | Wegeventil | Q2 | Teilvolumenstrom |
| 29 | Rückschlagventil | | |
| 30 | Hauptdruckleitung | | |

## Patentansprüche

1. Hydraulische Betätigungsvorrichtung (36), umfassend zwei Arbeitszylinder (7), die durch zumindest eine Zuleitung (30, 30a, 30b) mit einer Druckquelle (24) zur Bereitstellung eines hydraulischen Druckmediums verbunden sind, wobei zwischen der Druckquelle (24) und den Arbeitszylindern (7) ein Absperrsystem angeordnet ist, welches ein Abfließen des Druckmediums bei einem störungsbedingten Druckabfall verhindert, wobei das Absperrsystem in eine Ventilanordnung (37) integriert ist, welche ein Ventilgehäuse (38) mit zwei Zulaufanschlüssen (39) und zwei Ablaufanschlüssen (40a, 40b), einen gemeinsamen Schließkörper (41) sowie jeweils ein dem jeweiligen Ablaufanschluss (40a, 40b) zugeordnetes Federelement (44) umfasst, wobei sich der Schließkörper (41) im störungsfreien Betrieb in einer schwimmenden Position zwischen den Ablaufanschlüssen (40a, 40b) befindet, und bei einem störungsbedingten Druckabfall in einer Zuleitung (30a, 30b) zwischen einem Ablaufanschluss (40a, 40b) und dem diesem zugeordneten Arbeitszylinder (7) zum Verschieben des Schließkörpers (41) zu deren Ablaufanschluss (40a, 40b) an der Ventilanordnung (37) führt um ein Abfließen des Druckmediums aus dem Ablaufanschluss (40a, 40b) zu verhindern,
führt, wobei ein hydraulischer Mengenteiler für eine gleichmäßige Durchströmung der Ventilanordnung (37) vorgesehen ist, wobei die beiden Arbeitszylinder (7) mechanisch starr miteinander verbunden sind und somit als hydraulischer Mengenteiler wirken.

2. Betätigungsvorrichtung (36) nach Anspruch 1, **dadurch gekennzeichnet, dass** der Schließkörper (41) als ein Kolben (42) mit beidseitig daran angeordneten Schließelementen (43) ausgeführt ist.

3. Betätigungsvorrichtung (36) nach einem der Ansprüche 1 bis 2, **dadurch gekennzeichnet, dass** die Ablaufanschlüsse (40a, 40b) einander gegenüberliegend an dem Ventilgehäuse (38) angeordnet sind.

4. Betätigungsvorrichtung (36) nach einem der Ansprüche 1 bis 3, **dadurch gekennzeichnet, dass** das Absperrsystem in Kombination mit einem Druckspeicher (45) einsetzbar ist, welcher der Ventilanordnung (37) vorgeschaltet ist.

5. Betätigungsvorrichtung (36) nach einem der Ansprüche 1 bis 4, **dadurch gekennzeichnet, dass** das Absperrsystem zumindest einen Drucksensor (49) zur Detektion eines Druckabfalls in den Zuleitungen (40a, 40b) umfasst.

6. Arbeitsfahrzeug (1) mit einem Anbaugerät (5), **dadurch gekennzeichnet, dass** das Anbaugerät (5) durch eine nach einem der vorstehenden Ansprüche ausgebildete Betätigungsvorrichtung (36) höhenverstellbar ist.

7. Arbeitsfahrzeug (1) nach Anspruch 6, **dadurch gekennzeichnet, dass** das Absperrsystem an einer Achse des Arbeitsfahrzeugs (1) angeordnet ist, die unterhalb und/oder hinter dem Anbaugerät (5) liegt.

8. Arbeitsfahrzeug (1) nach Anspruch 6 oder 7, **dadurch gekennzeichnet, dass** das Arbeitsfahrzeug (1) als landwirtschaftliche Arbeitsmaschine (2), Baumaschine oder kommunales Nutzfahrzeug ausgebildet ist.

9. Verfahren zum Betreiben einer hydraulischen Betätigungsvorrichtung (36), umfassend zwei Arbeitszylinder (7), die durch zumindest eine Zuleitung (30a, 30b) mit einer Druckquelle (24) zur Bereitstellung eines hydraulischen Druckmediums verbunden werden, wobei ein Absperrsystem zwischen der Druckquelle (24) und den Arbeitszylindern (7) angeordnet ist, durch welches ein Abfließen des Druckmediums bei einem störungsbedingten Druckabfall in einer Zuleitung (30a, 30b) verhindert wird, wobei
das Absperrsystem in eine Ventilanordnung (37) integriert ist, welche ein Ventilgehäuse (38) mit zwei Zulaufanschlüssen (39) und zwei Ablaufanschlüssen (40a, 40b), einen gemeinsamen Schließkörper (41) sowie jeweils ein dem jeweiligen Ablaufanschluss (40a, 40b) zugeordnetes Federelement (44) umfasst, wobei der Schließkörper (41) im störungsfreien Betrieb in einer schwimmenden Position zwischen den Ablaufanschlüssen (40a, 40b) gehalten wird, und bei einem störungsbedingten Druckabfall in einer Zuleitung (30a, 30b) zwischen einem Ablaufanschluss (40a, 40b) und dem diesem zugeordneten Arbeitszylinder (7) der Schließkörper (41) zu deren Ablaufanschluss (40a, 40b) an der Ventilanordnung (37) verschoben wird um ein Abfließen des Druckmediums aus dem Ablaufanschluss (40a, 40b) zu verhindern, wobei
ein hydraulischer Mengenteiler für eine gleichmäßige Durchströmung der Ventilanordnung (37) vorgesehen ist, wobei die beiden Arbeitszylinder (7) mechanisch starr miteinander verbunden sind und somit als hydraulischer Mengenteiler wirken.

10. Verfahren nach Anspruch 9, **dadurch gekennzeichnet, dass** die Verbindung des anderen Arbeitszylinders (7) durch die intakte Zuleitung (40a, 40b) mit der Druckquelle (24) durch das Absperrsystem aufrechterhalten wird.

## Claims

1. A hydraulic actuating device (36), comprising two working cylinders (7) which are connected to a source of pressure (24) by at least one supply line (30, 30a, 30b) in order to provide a hydraulic pressure medium, wherein a shut-off system is disposed between the pressure source (24) and the working cylinders (7) which impedes the pressure medium from draining out in the case of a disruption-related drop in pressure, wherein the shut-off system is integrated into a valve assembly (37) which comprises a valve housing (38) with two inlet connections (39) and two outlet connections (40a, 40b), a common closing body (41), as well as a respective spring element (44) associated with the respective outlet connection (40a, 40b), wherein, in disruption-free operation, the closing body (41) is located in a floating position between the outlet connections (40a, 40b), and the case of a disruption-related drop in pressure in a supply line (30a, 30b) between an outlet connection (40a, 40b) and the working cylinder (7) associated therewith leads to displacement of the closing body (41) to its outlet connection (40a, 40b) on the valve assembly (37) in order to prevent the pressure medium from draining out of the outlet connection (40a, 40b),
wherein a hydraulic flow divider is provided for a uniform flow through the valve assembly (37), wherein the two working cylinders (7) are rigidly mechanically connected together and therefore act as hydraulic flow dividers.

2. The actuating device (36) according to claim 1, **characterized in that** the closing body (41) is configured as a piston (42) with closing elements (43) disposed on both sides thereof.

3. The actuating device (36) according to claim 1 or claim 2, **characterized in that** the outlet connections (40a, 40b) are mutually oppositely disposed on the valve housing (38).

4. The actuating device (36) according to one of claims 1 to 3, **characterized in that** the shut-off system can be used in combination with a pressure accumulator (45) which is connected upstream of the valve assembly (37).

5. The actuating device (36) according to one of claims 1 to 4, **characterized in that** the shut-off system comprises at least one pressure sensor (49) for detecting a drop in pressure in the supply lines (40a, 40b).

6. A working vehicle (1) with an attachment (5), **characterized in that** the height of the attachment (5) can be adjusted by an actuating device (36) according to one of the preceding claims.

7. The working vehicle (1) according to claim 6, **characterized in that** the shut-off system is disposed on an axle of the working vehicle (1) which lies below and/or behind the attachment (5).

8. The working vehicle (1) according to claim 6 or claim 7, **characterized in that** the working vehicle (1) is configured as an agricultural working machine (2), construction machine or municipal utility vehicle.

9. A method for operating a hydraulic actuating device (36) comprising two working cylinders (7) which are connected to a source of pressure (24) by at least one supply line (30, 30a, 30b) in order to provide a hydraulic pressure medium, wherein a shut-off system is disposed between the pressure source (24) and the working cylinders (7) by means of which draining out of the pressure medium is impeded in the case of a disruption-related drop in pressure in a supply line (30a, 30b), wherein the shut-off system is integrated into a valve assembly (37) which comprises a valve housing (38) with two inlet connections (39) and two outlet connections (40a, 40b), a common closing body (41), as well as a respective spring element (44) associated with the respective outlet connection (40a, 40b), wherein, in disruption-free operation, the closing body (41) is retained in a floating position between the outlet connections (40a, 40b), and the case of a disruption-related drop in pressure in a supply line (30a, 30b) between an outlet connection (40a, 40b) and the working cylinder (7) associated therewith, the closing body (41) is displaced to its outlet connection (40a, 40b) on the valve assembly (37) in order to impede the pressure medium from draining out of the outlet connection (40a, 40b),
wherein
a hydraulic flow divider is provided for a uniform flow through the valve assembly (37), wherein the two working cylinders (7) are rigidly mechanically connected together and therefore act as hydraulic flow dividers.

10. The method according to claim 9, **characterized in that** the connection of the other working cylinder (7) with the pressure source (24) is maintained by the shut-off system via the intact supply line (40a, 40b).

## Revendications

1. Dispositif d'activation hydraulique (36), comprenant deux cylindres de travail (7) qui sont reliés par au moins une conduite d'alimentation (30, 30a, 30b) à une source de pression (24) destinée à fournir un fluide hydraulique sous pression, sachant qu'il est prévu entre la source de pression (24) et les cylindres de travail (7) un système d'arrêt qui empêche l'évacuation du fluide sous pression en cas de chute de pression due à une défaillance, le système d'arrêt étant intégré dans un dispositif de vanne (37) qui comprend un corps de vanne (38) doté de deux raccords d'arrivée (39) et de deux raccords de sortie (40a, 40b), un corps d'obturation (41) commun, ainsi que chaque fois un élément formant ressort (44) associé au raccord de sortie (40a, 40b) respectif, sachant que le corps d'obturation (41), lors du fonctionnement exempt de défaillance, se trouve dans une position flottante entre les raccords de sortie (40a, 40b) et, en cas de chute de pression, due à une défaillance, dans une conduite d'alimentation (30a, 30b) entre un raccord de sortie (40a, 40b) et le cylindre de travail (7) qui lui est associé, provoque le déplacement du corps d'obturation (41) vers le raccord de sortie (40a, 40b) de celle-ci sur le dispositif de vanne (37), afin d'empêcher l'écoulement du fluide sous pression par le raccord de sortie (40a, 40b),
un diviseur de débit hydraulique étant prévu pour un écoulement uniforme à travers le dispositif de vanne (37), les deux cylindres de travail (7) étant reliés l'une à l'autre de manière rigide sur le plan mécanique et agissant de ce fait comme diviseur de débit hydraulique.

2. Dispositif d'activation (36) selon la revendication 1, **caractérisé en ce que** le corps d'obturation (41) est réalisé sous la forme d'un piston (42) comprenant des éléments d'obturation (43) disposés sur lui de part et d'autre.

3. Dispositif d'activation (36) selon l'une des revendications 1 à 2, **caractérisé en ce que** les raccords de sortie (40a, 40b) sont disposés en vis-à-vis l'un de l'autre sur le corps de vanne (38).

4. Dispositif d'activation (36) selon l'une des revendications 1 à 3, **caractérisé en ce que** le système d'arrêt peut être utilisé en combinaison avec un accumulateur de pression (45) qui est placé en amont du dispositif de vanne (37).

5. Dispositif d'activation (36) selon l'une des revendications 1 à 4, **caractérisé en ce que** le système d'arrêt comprend au moins un capteur de pression (49) pour la détection d'une chute de pression dans les conduites d'alimentation (40a, 40b).

6. Véhicule de travail (1) doté d'un élément rapporté (5), **caractérisé en ce que** l'élément rapporté (5) peut être réglé en hauteur par un dispositif d'activation (36) réalisé conformément à l'une des revendications précédentes.

7. Véhicule de travail (1) selon la revendication 6, **caractérisé en ce que** le système d'arrêt est disposé sur un essieu du véhicule de travail (1), qui se situe en dessous et/ou derrière l'élément rapporté (5).

8. Véhicule de travail (1) selon la revendication 6 ou 7, **caractérisé en ce que** le véhicule de travail (1) est réalisé comme machine de travail agricole (2), engin de chantier ou véhicule utilitaire communal.

9. Procédé pour faire fonctionner un dispositif d'activation hydraulique (36), comprenant deux cylindres de travail (7) qui sont reliés par au moins une conduite d'alimentation (30a, 30b) à une source de pression (24) destinée à fournir un fluide hydraulique sous pression, sachant qu'il est prévu entre la source de pression (24) et les cylindres de travail (7) un système d'arrêt qui empêche l'évacuation du fluide sous pression en cas de chute de pression dans une conduite d'alimentation (30a, 30b) suite à une défaillance, le système d'arrêt étant intégré dans un dispositif de vanne (37) qui comprend un corps de vanne (38) doté de deux raccords d'arrivée (39) et de deux raccords de sortie (40a, 40b), un corps d'obturation (41) commun, ainsi que chaque fois un élément formant ressort (44) associé au raccord de sortie (40a, 40b) respectif, sachant que le corps d'obturation (41), lors du fonctionnement exempt de défaillance, est maintenu dans une position flottante entre les raccords de sortie (40a, 40b) et, en cas de chute de pression, due à une défaillance, dans une conduite d'alimentation (30a, 30b) entre un raccord de sortie (40a, 40b) et le cylindre de travail (7) qui lui est associé, le corps d'obturation (41) est déplacé vers le raccord de sortie (40a, 40b) de celle-ci sur le dispositif de vanne (37), afin d'empêcher l'écoulement du fluide sous pression par le raccord de sortie (40a, 40b),
un diviseur de débit hydraulique étant prévu pour un écoulement uniforme à travers le dispositif de vanne (37), les deux cylindres de travail (7) étant reliés l'une à l'autre de manière rigide sur le plan mécanique et agissant de ce fait comme diviseur de débit hydraulique.

10. Procédé selon la revendication 9, **caractérisé en ce que** le raccordement de l'autre cylindre de travail (7) à la source de pression (24) par l'intermédiaire de la conduite d'alimentation (40a, 40b) intacte est maintenue par le système d'arrêt.
